Europäisches Patentamt

European Patent Office

Office européen des brevets

(19)

(11) Numéro de publication : **0 309 331 B1**

(12) **FASCICULE DE BREVET EUROPEEN**

(45) Date de publication du fascicule du brevet :
**03.06.92 Bulletin 92/23**

(51) Int. Cl.⁵ : **B01D 63/02, B65H 54/56,
B01D 63/06**

(21) Numéro de dépôt : **88402362.3**

(22) Date de dépôt : **20.09.88**

(54) **Procédé et dispositif pour la réalisation d'un faisceau de filaments, notamment de fibres creuses semi-perméables.**

(30) Priorité : **23.09.87 FR 8713251**

(43) Date de publication de la demande :
**29.03.89 Bulletin 89/13**

(45) Mention de la délivrance du brevet :
**03.06.92 Bulletin 92/23**

(84) Etats contractants désignés :
**DE ES FR GB IT LU NL SE**

(56) Documents cités :
**EP-A- 0 041 467
DE-A- 2 511 192
DE-C- 322 598
FR-A- 1 514 200
FR-A- 1 587 376
JP-A-59 059 217
US-A- 3 579 810**

(56) Documents cités :
**PATENT ABSTRACTS OF JAPAN, vol. 6, no.
127 (C-113)[1005], 13 juillet 1982, page 61 C
113; & JP-A-57 53 205 (MITSUBISHIRAYON
K.K.) 30-03-1982**

(73) Titulaire : **SOCIETE LYONNAISE DES EAUX
Société Anonyme
52, rue de Lisbonne
F-75002 Paris (FR)**

(72) Inventeur : **Schutz, Richard Hadrien
154, rue de l'Illberg
68200 Mulhouse (FR)**
Inventeur : **Paris, Patrick
249, avenue Gaston Doumergue
31170 Tournefeuille (FR)**

(74) Mandataire : **Barre, Philippe
Cabinet Barre-Gatti-Laforgue 95 rue des
Amidonniers
F-31069 Toulouse Cédex (FR)**

## Description

L'invention concerne un procédé et un dispositif pour la réalisation d'un faisceau de filaments à partir d'au moins un filament. Cette invention s'applique notamment à la réalisation d'un faisceau de fibres creuses semi-perméables utilisé pour la fabrication de modules de filtration.

La fabrication d'un faisceau de fibres creuses destiné à être introduit dans un carter pour former un module de filtration est une opération délicate en raison de la fragilité de ces fibres qui rend toute manipulation difficile. Pour cette raison, plusieurs techniques ont été mises au point dans le but de minimiser le nombre d'interventions humaines lors de la réalisation de ce faisceau.

La technique la plus utilisée est celle du tricotage à maille jetée sur métier grand trameur. Le tricot obtenu est formé, d'une part, par les fibres qui forment transversalement la trame et, d'autre part, par des chaînettes qui soutiennent cette trame. Cette nappe est ensuite enroulée en spirale de façon à former un faisceau de fibres parallèles. Ces opérations sont effectuées au moyen de machines spécialement conçues à cet effet et ne demandent donc que peu d'interventions humaines. Toutefois, cette technique présente plusieurs inconvénients. D'une part, elle nécessite une transformation de la machine tout d'abord pour l'alimentation en trame à cause de la faible résistance de la fibre et ensuite pour enrouler en spirale la nappe. D'autre part, les fils de chaîne écrasent la fibre creuse lors de la formation des chaînettes. Enfin, il se peut que sur certaines machines l'extrémité des fibres formant le faisceau soit ouverte, ce qui pose des problèmes lors de la fabrication du module de filtration. En effet, l'étanchéité de ce module est réalisée vers chacune des extrémités, au moyen d'une résine durcissable, apppelée empotage, d'où des risques de pénétration de cette résine à l'intérieur des fibres et, donc, d'obturation de ces dernières.

Une autre technique décrite dans FR-A-2.525.487 consiste à bobiner la fibre de façon croisée autour d'un cylindre de section polygonale. Les fibres sont ensuite coupées au niveau de chaque arête du cylindre et les nappes ainsi formées sont enfin enroulées en spirale de façon à former des faisceaux de fibres. Cette technique conduit donc aux mêmes inconvénients que la technique précédente.

Une troisième technique, telle que décrite dans FR-A-1.514.200 et JP-A-59.059.217, consiste à enrouler la fibre autour d'un support de forme polygonale ou circulaire, adapté pour permettre de récupérer l'enroulement formé, par exemple par réduction du diamètre de ce support tel que décrit dans FR-A-1.587.376. Le faisceau est ensuite formé en effectuant une traction au niveau de deux génératrices diamétralement opposées de cet enroulement.

L'empotage peut alors être réalisé avec des fibres fermées, sans risque de pénétration de résine à l'intérieur de ces fibres. Toutefois, ce procédé présente également des inconvénients. En premier lieu, en raison du coefficient de frottement important des fibres, le fait d'effectuer une traction sur l'enroulement entraîne la plupart du temps une modification notable de la section de cet enroulement et de l'arrangement des fibres. Il est donc par conséquent très difficile d'obtenir un faisceau régulier présentant une forme prédéterminée. De plus, toute traction, même faible, effectuée sur les fibres entraîne une déformation de structure de ces dernières en raison de leur faible zone linéaire élastique. De ce fait, les performances hydrauliques des fibres se trouvent fréquemment diminuées.

Une autre technique décrite dans le brevet US-A-4.226.378 consiste à enrouler la fibre autour d'une roue polygonale. Les fibres sont ensuite découpées au niveau de chaque arête du polygone de façon à obtenir directement un nombre de faisceaux égal au nombre de côtés de la roue polygonale. Une seule machine est donc nécessaire pour réaliser le faisceau. Toutefois, ce procédé présente l'inconvénient relatif à l'empotage des faisceaux dans les modules de filtration.

Une autre technique décrite dans la demande de brevet EP-A-41.467 propose un système permettant d'empoter la fibre creuse simultanément à son enroulement sur un support polygonal, les faisceaux ainsi constitués et empotés étant ensuite découpés au niveau de chaque arête du polygone. Si en théorie cette technique est attrayante, elle apparaît toutefois à l'examen très difficile à mettre en oeuvre dans la pratique. En effet, outre les problèmes fins de régulation en vue d'obtenir un temps de contact entre la fibre et le rouleau encolleur (dans le cas du dispositif représenté à la figure 1 de ce brevet) permettant d'avoir une longueur d'empotage variable en fonction de l'augmentation du périmètre de l'écheveau, il est de plus nécessaire de trouver une résine et un rouleau permettant d'enduire la fibre creuse sur tout son périmètre d'une façon suffisamment parfaite pour que l'empotage ne présente aucun défaut (bulles d'air, défaut de résine... créant des défauts d'étanchéité), tout en évitant des projections ou des coulées de résine. Une partie au moins de ces difficultés n'a d'ailleurs pas échappée aux auteurs puisqu'il est précisé (page 7, lignes 15 à 16 de ce brevet) qu'il est avantageux de faire l'opération à des vitesses faibles pour accroître la précision de l'empotage. Il est à noter, en outre, que le dispositif représenté à la figure 2 de ce brevet possède les mêmes inconvénients en ce qui concerne la régulation fine de la distance et de la hauteur des rouleaux par rapport à la roue tournante.

Cette demande EP-A-41.467 décrit également une solution censée permettre l'obtention de faisceaux de section déterminée consistant à utiliser des coquilles ou des moyens pour supporter l'écheveau à chaque angle de la roue polygonale (cf. page 8, lignes 7 à 10 de ce brevet). Toutefois, si l'utilisation de coquilles permet probablement d'arranger les fibres selon la forme de ces dernières, il n'est absolument pas évident de "fermer" cette coquille pour obtenir un faisceau complet de forme déterminée sauf dans le cas particulier détaillé d'un faisceau rectangulaire où la coquille complètement remplie est refermée par un couvercle. Il est à noter de surcroît que même dans ce cas la réalisation est de toute façon moins simple et probablement plus onéreuse que si l'on disposait le faisceau dans un tube fabriqué d'un seul tenant.

Il convient enfin de signaler une technique décrite dans le brevet US-A-3.579.810 consistant à enrouler une fibre creuse sur un support plan et permettant la réalisation d'une nappe rectangulaire. Toutefois, cette technique est limitée de par son concept à la réalisation de faisceaux rectangulaires de faible épaisseur dont les dimensions sont conditionnées par celles du support et qui ne peuvent être introduits que dans des carters présentant la même forme rectangulaire aplatie.

La présente invention vise à pallier les inconvénients des techniques précitées et a pour objectif essentiel de fournir un procédé fiable, simple et rapide permettant de réaliser, en une seule opération, un faisceau de section prédéterminée, formé de fibres dont les extrémités sont fermées lors de l'empotage et dont les performances ne sont pas altérées.

A cet effet, l'invention concerne un procédé pour la fabrication d'un faisceau de filaments, notamment de fibres creuses semi-perméables, consistant :
– à enrouler chaque filament en plusieurs couches superposées autour d'un support-plan rotatif doté de deux bords extrêmes d'envidage perpendiculaires au sens d'enroulement du filament, en conférant à ce filament un mouvement transversal alternatif parallèle aux bords d'envidage, ce mouvement transversal étant d'amplitude décroissante d'une couche à la suivante de façon à obtenir un enroulement présentant un profil déterminé,
– à retirer le support-plan en rapprochant l'un de l'autre les bords d'envidage, de façon à obtenir un faisceau possédant des extrémités recourbées et une section transversale fonction du profil de l'enroulement.

Ce procédé présente l'avantage de permettre de réaliser directement sur le support-plan un enroulement présentant une section prédéterminée permettant d'obtenir après rétraction de ce support-plan, un faisceau formé de fibres parallèles et de forme conjuguée de la section interne du carter du module de filtration. Ce procédé ne nécessite aucune opération de traction ou autre, et permet donc de réaliser un faisceau de section bien définie dont les fibres ne sont pas altérées.

En outre, chacune des extrémités de ce faisceau détermine un volume fermé et l'empotage du faisceau peut ainsi être réalisé avec des fibres fermées et, par conséquent, sans risque de pénétration de résine à l'intérieur de ces fibres.

Après réalisation de ces empotages, les extrémités recourbées des fibres sont alors avantageusement découpées de façon à obtenir un faisceau de fibres rectilignes débouchant chacune à l'extérieur desdits empotages.

Ces empotages peuvent être réalisés, soit avant d'introduire le faisceau dans le carter, soit une fois le faisceau introduit dans ce carter. Dans ce dernier cas, ce faisceau est revêtu d'un grillage de maintien avant son introduction dans le carter. Dans l'un et l'autre cas, le module final est enfin obtenu en découpant par tranchage les deux extrémités du carter et du faisceau, après polymérisation de la résine.

Par ailleurs, le faisceau ainsi obtenu peut être ensuite avantageusement torsadé de façon à le rendre plus compact. Cette technique présente notamment un intérêt lors de la fabrication de modules dans lesquels le fluide à épurer s'écoule à l'extérieur des fibres. En effet, dans ce cas, plus le faisceau est compact et plus la probabilité pour une particule de rencontrer une paroi d'échange, lorsque le liquide s'écoule, est importante.

L'invention s'étend à un dispositif de mise en oeuvre de ce procédé du type comprenant :
– des moyens d'enroulement comprenant un support rétractile associé à des moyens d'entraînement en rotation,
– des moyens d'alimentation en au moins un filament adaptés pour délivrer chaque filament avec une vitesse linéaire moyenne sensiblement constante,
– un guide-fil associé à des moyens d'entraînement en translation aptes à le déplacer à vitesse constante selon un mouvement transversal alternatif d'amplitude variable parallèle à l'axe de rotation du support, en vue d'obtenir un enroulement présentant un profil déterminé.

Selon la présente invention, ce dispositif se caractérise en ce que le support est un support-plan doté de deux bords extrêmes d'envidage perpendiculaires au sens d'enroulement du filament, aptes à être rapprochés l'un de l'autre en vue de libérer ledit enroulement.

D'autres caractéristiques et avantages de l'invention se dégageront de la description détaillée qui suit, en référence aux dessins annexés qui en présentent un mode de réalisation préférentiel. Sur ces dessins qui font partie intégrante de la présente description :
– la figure 1 est une vue en perspective d'un dispositif conforme à l'invention,
– les figures 2a et 2b sont des schémas illustrant les étapes permettant de réaliser un faisceau rectiligne à partir d'un enroulement de fibres sur ce dispositif,

– les figures 3a à 3d sont des schémas illustrant les étapes permettant la fabrication d'un module de filtration au moyen d'un faisceau réalisé conformément à l'invention,

– les figures 4a et 4b sont des schémas illustrant une variante de mise en oeuvre pour la fabrication de ce module.

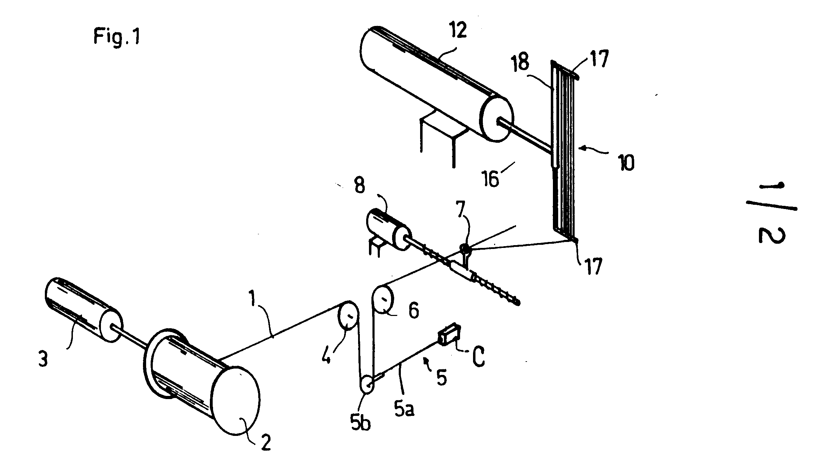

Le dispositif représenté à la figure 1 est destiné à réaliser un faisceau de filaments à partir d'un ou de plusieurs filaments 1. Il permet plus particulièrement la réalisation d'un faisceau de fibres creuses semiperméables destinées à la fabrication de modules de filtration.

Ce dispositif comprend une bobine 2 d'alimentation provenant de l'unité de filage ou de séchage de la fibre, selon que l'on travaille avec des fibres sèches ou humides. Cette bobine 2 est montée de façon connue en soi en bout d'arbre d'un moteur-réducteur 3 adapté pour l'entraîner avec une vitesse de rotation variable, de façon à délivrer la fibre 1 avec une vitesse linéaire sensiblement constante.

Cette fibre 1 est ensuite guidée, au moyen d'une poulie 4 de renvoi vers un régulateur de tension 5. Ce régulateur de tension comporte un bras articulé 5a doté à son extrémité libre d'une poulie 5b autour de laquelle défile la fibre 1.

Cette fibre 1 est ensuite guidée par l'intermédiaire d'une deuxième poulie 6 de renvoi vers un guide-fil 7 constitué en l'exemple d'un anneau doté d'une fente transversale 7a périphérique, disposée obliquement par rapport au sens d'avancement de la fibre 1 et destinée à permettre d'enfiler facilement cette fibre dans ce guide-fil. Cet anneau ainsi que toutes les poulies sont, en outre, préférentiellement réalisés en téflon de façon à ne pas endommager la fibre.

Le guide-fil 7 est entraîné transversalement au moyen d'un moteur 8, tel qu'un moteur pas à pas, adapté pour déplacer ce guide-fil selon un mouvement alternatif d'amplitude variable. Ce moteur 8 est commandé au moyen d'une unité de commande programmée (non représentée) adaptée pour conférer au guide-fil 7 un mouvement alternatif d'amplitude décroissante de façon à obtenir un enroulement présentant un profil déterminé sur un support entraîné en rotation au moyen d'un moteur-réducteur et disposé en aval du guide-fil. 7.

Ce support 10 présente une forme plane et se trouve positionné perpendiculairement au sens d'avancement de la fibre. Il est porté en bout d'arbre d'un moteur réducteur 12. Etant donné que la distance entre le guide-fil. 7 et le point d'envidage de la fibre 1 sur ce support varie constamment lors de la rotation du support, la vitesse de rotation du moteur-réducteur 12 est, en outre, asservie à des moyens de détection (C) de la position angulaire du régulateur de tension.

Ces moyens de détection sont adaptés pour engendrer une augmentation ou une diminution de la vitesse angulaire du support d'enroulement 10 selon le principe suivant : lorsque la vitesse de défilement de la fibre 1, en aval du bras articulé 5a, est supérieure à la vitesse linéaire de cette dernière à la sortie de la bobine d'alimentation 2, le bras articulé 5a tourne dans le sens des aiguilles d'une montre, en se référant à la figure 1. Le détecteur de position (C) engendre alors une diminution de la vitesse angulaire du support d'enroulement 10, ce qui entraîne une rotation du bras articulé 5a dans le sens contraire des aiguilles d'une montre et par conséquent une nouvelle augmentation de la vitesse angulaire d'enroulement commandée par le détecteur de position (C).

Un tel support 10 permet d'enrouler les fibres parallèlement les unes aux autres grâce à sa forme plane. La seule opération nécessaire pour réaliser le faisceau consiste donc à rétracter ce support 10 dans son plan.

A cet effet, ce support comporte deux tiges-support 17 disposées perpendiculairement au sens d'enroulement de la fibre et reliées par un montant télescopique 18.

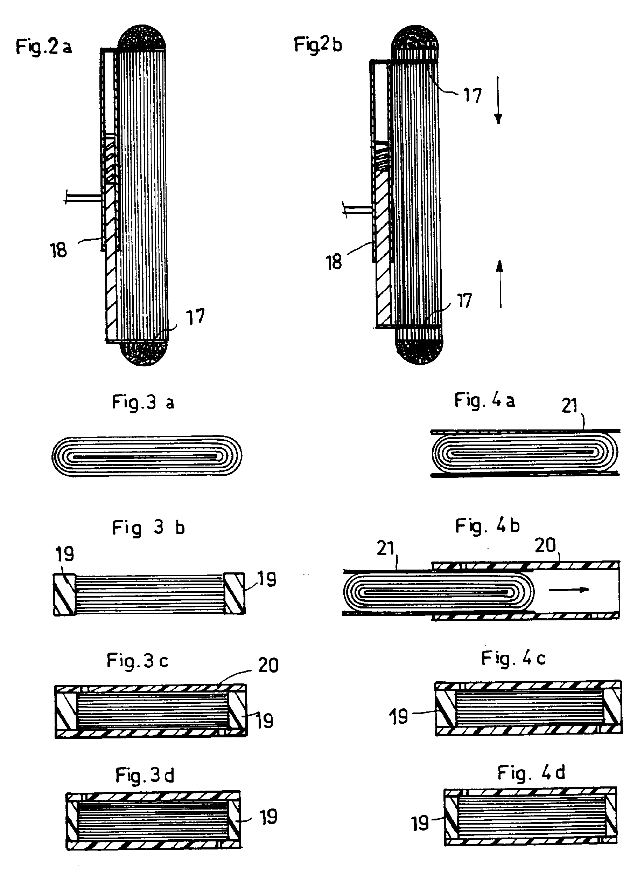

La fibre 1 vient donc s'enrouler autour des tiges-support 17 (figure 2a) et la seule opération nécessaire pour la récupération du faisceau consiste à réduire la longueur du montant 18 (figure 2b).

Le faisceau ainsi réalisé est utilisé pour fabriquer un module de filtration. Pour cela, deux méthodes peuvent être utilisées.

La première méthode, illustrée aux figures 3a à 3d consiste à réaliser dans un premier temps un empotage 19, au moyen d'une résine durcissable, au niveau des deux extrémités du faisceau (figure 3b). Ce faisceau, ainsi figé par les deux empotages 19 est ensuite introduit dans un carter 20 (figure 3c). La dernière opération consiste alors à trancher les deux extrémités du faisceau et du carter 20 après polymérisation de la résine de façon à obtenir un module final renfermant un faisceau de fibres parallèles dont les extrémités débouchent à l'extérieur des empotages 19 (figure 3d).

Selon une deuxième méthode, le faisceau est initialement revêtu d'un grillage 21 de maintien (figure 4a) puis introduit dans le carter 20 (figure 4b). Les empotages 19 sont alors réalisés après mise en place du faisceau dans le carter 20 (figure 4c), la dernière opération consistant, comme précédemment, à trancher les deux extrémités du module, après polymérisation de la résine (figure 4d).

L'avantage essentiel de ces deux méthodes réside dans le fait que les fibres sont fermées lors de la réalisation des empotages 19, évitant tout risque d'introduction de résine à l'intérieur de ces fibres.

## Revendications

1. Procédé pour la réalisation d'un faisceau de filaments (1), notamment de fibres creuses semi-perméables, à partir d'au moins un filament consistant :
  – à enrouler chaque filament (1) en plusieurs couches superposées autour d'un support-plan rotatif (10) doté de deux bords extrêmes d'envidage (17) perpendiculaires au sens d'enroulement du filament, en conférant à ce filament un mouvement transversal alternatif parallèle aux bords d'envidage, ce mouvement transversal étant d'amplitude décroissante d'une couche à la suivante de façon à obtenir un enroulement présentant un profil déterminé,
  – à retirer le support-plan (10) en rapprochant l'un de l'autre les bords d'envidage (17), de façon à obtenir un faisceau possédant des extrémités recourbées et une section transversale fonction du profil de l'enroulement.

2. Procédé selon la revendication 1, dans lequel on torsade le faisceau de façon à le rendre plus compact.

3. Procédé pour la fabrication d'un module de filtration au moyen d'un faisceau de fibres (1) creuses réalisé selon un procédé conforme à l'une des revendications 1 ou 2, caractérisé en ce qu'il consiste à effectuer un empotage (19) vers chacune des extrémités dudit faisceau au moyen d'une résine durcissable et à trancher les extrémités recourbées dudit faisceau de façon à obtenir un faisceau de fibres rectilignes débouchant chacune à l'extérieur de chacun des empotages (19).

4. Procédé selon la revendication 3, caractérisé en ce que l'on effectue dans un premier temps les empotages (19), l'on introduit ensuite le faisceau dans un carter (20), puis l'on tranche les extrémités du carter (20) et du faisceau après polymérisation de la résine.

5. Procédé selon la revendication 3, caractérisé en ce que l'on dispose un grillage (21) de maintien autour du faisceau avant d'introduire ledit faisceau dans un carter (20), l'on effectue ensuite les empotages (19) vers chacune des extrémités du faisceau logé dans ledit carter (20) et l'on tranche les extrémités du carter (20) et du faisceau après polymérisation de la résine.

6. Dispositif de mise en oeuvre d'un procédé conforme à la revendication 1, du type comprenant :
  – des moyens d'enroulement (10, 12) comprenant un support rétractile (10) associé à des moyens d'entraînement ( 12 ) en rotation,
  – des moyens d'alimentation (2, 3) en au moins un filament (1) adaptés pour délivrer chaque filament avec une vitesse linéaire moyenne sensiblement constante,
  – un guide-fil (7) associé à des moyens d'entraînement (8) en translation aptes à le déplacer selon un mouvement transversal alternatif d'amplitude variable parallèle à l'axe de rotation du support (10), en vue d'obtenir un enroulement présentant un profil déterminé, ledit dispositif étant caractérisé en ce que le support (10) est un support-plan doté de deux bords extrêmes d'envidage (17) perpendiculaires au sens d'enroulement du filament, aptes à être rapprochés l'un de l'autre en vue de libérer ledit enroulement.

7. Dispositif selon la revendication 6, dans lequel les moyens d'alimentation comprennent une bobine (2) de conditionnement de chaque filament (1), et un moteur-réducteur (3) apte à entraîner ladite bobine avec une vitesse de rotation variable de façon à délivrer chaque filament avec une vitesse linéaire moyenne sensiblement constante.

8. Dispositif selon l'une des revendications 6 ou 7, comprenant un régulateur de tension (5) comportant un bras articulé (5a) doté d'au moins une extrémité libre portant une poulie (5b) de guidage du filament (1), ledit dispositif étant caractérisé en ce que :
  – des moyens de détection (C) de la position du bras articulé (5a) du régulateur de tension (5) sont disposés sur ledit bras articulé,
  – les moyens d'enroulement comportent un moteur-réducteur (12) asservi aux moyens de détection (C) de la position du régulateur de tension (5) de façon à entraîner le support-plan (10) avec une vitesse instantanée de rotation variable.

9. Dispositif selon la revendication 8, caractérisé en ce que le support-plan (10) est constitué de deux tiges-support (17) d'envidage disposées perpendiculairement au sens d'enroulement du filament et reliées par un montant (18) télescopique.

## Patentansprüche

1. Verfahren zur Herstellung eines Fadenbündels (1), insbesondere von halbdurchlässigen Hohlfasern, ausgehend von mindestens einem Faden und darin bestehend,
  – daß man jeden Faden (1) in mehreren überlagerten Lagen um einen mit zwei zu der Fadenwickelrichtung senkrechten Spul-Endrändern (17) versehenen drehbaren Flachträger (10) wickelt, wobei diesem Faden eine zu den Spulrändern parallele Alternativquerbewegung verliehen wird, und zwar hat diese Querbewegung eine von Lage zu Lage abnehmende Amplitude, so daß eine Wicklung mit einem bestimmten Profil erzielt wird,
  – daß Flachträger (10) abgezogen wird, indem man die Spulränder (17) einander nähert, um ein Bündel mit gekrümmten Enden und einem von dem Wickelprofil abhängigen Querschnitt zu

erzielen.

2. Verfahren nach Anspruch 1, bei dem man das Bündel verdrillt, um es kompakter zu machen.

3. Verfahren zur Fertigung eines Filtermoduls mit Hilfe eines nach einem Verfahren im Einklang mit einem der Ansprüche 1 oder 2 hergestellten Hohlfaserbündels (1), dadurch gekennzeichnet, daß es darin besteht, an jedem der Enden des besagten Bündels mit Hilfe eines härtbaren Harzes einen Verguß (19) zu bewirken und die gekrümmten Enden des besagten Bündels so zu schneiden, daß ein Bündel geradliniger Fasern erzielt wird, von denen jede an der Außenseite jedes der Vergüsse (19) austritt.

4. Verfahren nach Anspruch 3, dadurch gekennzeichnet, daß man in einer ersten Stufe die Vergüsse (19) herstellt, das Bündel dann in ein Gehäuse (20) einführt, und schließlich, nach Polymerisierung des Harzes, die Enden des Gehäuses (20) und des Bündels schneidet.

5. Verfahren nach Anspruch 3, dadurch gekennzeichnet, daß man ein Haltegitter (21) um das Bündel legt, bevor man das besagte Bündel in ein Gehäuse (20) einführt, dann die Vergüsse (19) an jedem der Enden des in dem besagten Gehäuse (20) befindlichen Bündel bewirkt und schließlich nach Polymerisierung des Harzes die Enden des Gehäuses (20) und des Bündels schneidet.

6. Gerät zur Durchführung eines Verfahrens nach Anspruch 1, der die folgenden Einrichtungen umfassenden Art:
   – Wickelmittel (10, 12) umfassend einen rückziehbaren Träger (10), der mit Mitteln für drehenden Antrieb (12) in Verbindung steht,
   – Mittel zum Zuführen (2, 3) von mindestens einem Faden (1), die so beschaffen sind, daß sie jeden Faden mit einer im wesentlichen konstanten mittleren Lineargeschwindigkeit fördern,
   – einen Fadenführer (7), der mit Mitteln für Translationsantrieb (8) in Verbindung steht, wobei die besagten Mittel so beschaffen sind, daß sie den besagten Fadenführer mit einer Alternativ-Querbewegung veränderlicher Amplitude parallel zu der Drehachse des Trägers (10) verlagern, um eine Wicklung mit einem bestimmten Profil zu erzielen, wobei das besagte Gerät dadurch gekennzeichnet ist, daß Träger (10) ein Flachträger mit zwei zur Fadenwickelrichtung senkrechten Endspulrändern (17) ist, die einander genähert werden können, um die besagte Wicklung zu befreien.

7. Gerät nach Anspruch 6, bei dem die Zufuhrmittel eine Spule (2) zum Konditionieren jedes Fadens (1) und einen Reduktions-motor (3) umfassen, der so beschaffen ist, daß er die besagte Spule mit einer veränderlichen Drehzahl antreibt, um jeden Faden mit im wesentlichen konstanter mittlerer linearer Geschwindigkeit zu fördern.

8. Gerät nach einem der Ansprüche 6 oder 7, umfassend einen Spannungsregler (5) mit einem Gelenkarm (5a), der mindestens ein eine Rolle (5b) zur Führung des Fadens (1) umfassendes freies Ende aufweist, wobei das besagte Gerät dadurch gekennzeichnet ist,
   – daß Mittel zur Bestimmung (C) der Lage von Gelenkarm (5a) des Spannungsreglers (5) an dem besagten Gelenkarm angeordnet sind,
   – daß die Wickelmittel einen durch die Mittel zur Bestimmung (C) der Lage des Spannungsreglers (5) gesteuerten Reduktionsmotor (12) umfassen, um den Flachträger (10) mit veränderlicher Momentandrehzahl anzutreiben.

9. Gerät nach Anspruch 8, dadurch gekennzeichnet, daß sich der Flachträger (10) aus zwei Abstütz-Spulstäben (17), die senkrecht zur Fadenwickelrichtung angeordnet und durch eine Teleskopstange (10) miteinander verbunden sind, zusammensetzt.

## Claims

1. Process for making a bundle of filaments (1), in particular of hollow semi-permeable fibres, from at least one filament, consisting :
   – in winding each filament (1) in several superimposed layers about a rotary flat support (10) endowed with two end spooling-edges (17) perpendicular to the direction in which the filament is wound, while conferring to said filament an alternative transverse movement parallel to the spooling-edges, this transverse movement having an amplitude diminishing from one layer to the next so as to obtain a winding of predetermined profile,
   – in withdrawing flat support (10) by approaching spooling edges (17) to one another so as to obtain a bundle with curved ends and a cross-section depending on the winding profile.

2. Process according to claim 1, in which the bundle is twisted so as to make it more compact.

3. Process for manufacturing a filtration module with the aid of a bundle of hollow fibres (1) made following a process according to one of claims 1 or 2, characterised in that it consists in producing, by means of a resin capable of being hardened, a seal (19) at each of the ends of said bundle and in cutting the curved ends of said bundle so as to attain a bundle of straight fibres each of which emerges at the outside of each of seals (19).

4. Process according to claim 3, characterised in that one produces, at a first stage, the seals (19), introduces thereafter the bundle into a casing (20) and eventually, after polymerisation of the resin, cuts the ends of casing (20) and of the bundle.

5. Process according to claim 3, characterised in that one arranges a retaining grid (21) about the bundle before introducing said bundle into a casing (20), that one then produces, at each of the ends of the bundle accommodated within said casing (20), the seals (19), and cuts, after polymerisation of the resin, the ends of casing (20) and of the bundle.

6. Device for implementing a process according to claim 1 of the type comprising :

– winding means (10, 12) comprising a retractable support (10) associated with rotary-driving means (12),

– means for feeding (2, 3) at least one filament (1), so designed as to deliver each filament at a mean linear speed which is substantially constant,

– a filament guide (7) associated with translatory driving means (8) so designed as to displace said guide in accordance with an alternative transverse movement of variable amplitude parallel to the axis of rotation of support (10), with a view to attaining a winding of predetermined profile, said device being characterised in that support (10) is a flat support endowed with two end spooling edges (17) perpendicular to the direction in which the filament is wound, so designed as to be capable of being approached to one another in order to release said winding.

7. Device according to claim 6 in which the feeding means comprise a spool (2) for conditioning each filament (1) and a reduction motor (3) capable of driving said spool at a variable rotary speed so as to deliver each filament at a mean linear speed which is substantially constant.

8. Device according to one of claims 6 or 7, comprising a tension regulator (5) provided -with an articulated arm (5a), said arm having at least one free end carrying a pulley (5b) for guiding filament (1), said device being characterised in that :

– means for detecting (C) the position of articulated arm (5a) of tension regulator (5) are arranged on said articulated arm ,

– the winding means comprise a reduction motor (12) controlled by the means for detecting (C) the position of tension regulator (5) so as to drive said support (10) at a variable momentary speed of rotation.

9. Device according to claim 8, characterised in that flat support (10) consists of two spooling support bars (17) arranged perpendicularly to the direction in which the filament is wound, said support rods being connected by telescopic upright (18).

1/2

Fig.1

Fig.2 a

Fig2 b

18

17

17

18

17

17

Fig.3 a

Fig. 4 a                    21

Fig 3 b

19

19

Fig. 4 b

21                    20

Fig.3 c                    20

19

Fig. 4 c

19

Fig. 3 d

19

Fig. 4 d

19